# EUROPÄISCHE PATENTSCHRIFT

(11) **EP 4 261 478 B1**
(45) Veröffentlichungstag und Bekanntmachung des Hinweises auf die Patenterteilung: **08.01.2025**
(21) Anmeldenummer: 22167876.6
(22) Anmeldetag: 12.04.2022
(51) Int. Cl.: F25B 15/04, F25B 41/40

(54) **SORPTIONSWÄRMEPUMPE UND SORPTIONSKREISPROZESS**
SORPTION HEAT PUMP AND SORPTION CIRCUIT PROCESS
POMPE À CHALEUR À ABSORPTION ET PROCESSUS DE CIRCUIT À ABSORPTION

(43) Veröffentlichungstag der Anmeldung: 18.10.2023
(73) Patentinhaber: AGO Technologie GmbH, 95326 Kulmbach (DE)
(72) Erfinder: Ramming, Klaus, 95336 Mainleus (DE)
(74) Vertreter: Bauer, Dirk

(56) Entgegenhaltungen:
- EP-A1- 3 540 332
- EP-A1- 3 540 333
- EP-A1- 3 964 770
- CN-A- 104 764 244
- JP-A- 2015 025 628
- US-A- 4 475 361

## Beschreibung

Die Erfindung betrifft einen Sorptionskreisprozess, wie er praktisch verwirklicht wird in einer Sorptionswärmepumpe mit gasförmigem Kältemittel und flüssigem Lösungsmittel, einer armen und einer reichen Lösung, wobei die arme und die reiche Lösung einphasige Mischungen des Lösungsmittels und des Kältemittels sind, sowie mit einem ersten Absorber, in dem die arme Lösung einen ersten Teilstrom des Kältemittels absorbiert und einem zweiten Absorber, in dem die arme Lösung unmittelbar anschließend einen zweiten Teilstrom des Kältemittels absorbiert und dabei jeweils Wärme abgibt und einem Austreiber, in dem die reiche Lösung von außen zugeführte Wärme aufnimmt und dabei das Kältemittel austreibt. Die Erfindung betrifft somit einen Sorptionskreisprozess mit gasförmigem Kältemittel und flüssigem Lösungsmittel, einer armen und einer reichen Lösung, wobei die arme und die reiche Lösung einphasige Mischungen des Lösungsmittels und des Kältemittels sind, und wobei die arme Lösung einen ersten Teilstrom des Kältemittels und unmittelbar anschließend einen zweiten Teilstrom des Kältemittels absorbiert und dabei jeweils Wärme abgibt.

Die Absorptionseinheit mit zwei Absorbern in Reihe erlaubt die Nutzung der Sorptionswärmepumpe mit im Vergleich zu einem einzelnen Absorber deutlich geringeren Temperaturdifferenzen zwischen der Lösung und dem Heizmedium - in der Regel Wasser - bei einer zugleich hohen Spreizung zwischen den Ein- und Austrittstemperaturen der Lösung. Eine solche Sorptionswärmepumpe mit zwei als Fallfilmabsorber angeschlossenen Plattenwärmetauschern und ein solcher Sorptionskreisprozess sind aus EP 3 964 770 A1 bekannt. Um den Druckverlust der armen Lösung beim Durchströmen des ersten Absorbers auszugleichen wird der zweite Teilstrom des Kältemittels vor Eintritt in den zweiten Absorber auf das verminderte Druckniveau gedrosselt.

Im Hintergrund der Erfindung offenbart *Kahn R., Ein Ammoniak-Wasser Absorptionsskreislauf für hohen Temperaturhub* einen Sorptionskreisprozess, der einen Plattenwärmetauscher als Blasenabsorber einsetzt. Plattenwärmetauscher als Fallfilm- oder Blasenabsorber sind in *Niebergall W., Sorptionskältemaschinen* beschrieben.

### Aufgabe

Der Erfindung liegt die Aufgabe zugrunde, die Sorptionswärmepumpe zu vereinfachen.

### Lösung

Ausgehend von der bekannten Sorptionswärmepumpe wird für die Umsetzung des Sorptionskreisprozesses nach der Erfindung vorgeschlagen, ein Fallrohr zwischen einem Auslass für die arme Lösung aus dem ersten Absorber und einem Einlass für die arme Lösung in den zweiten Absorber vorzusehen derart, dass eine Flüssigkeitssäule der armen Lösung an dem Einlass in den zweiten Absorber ein Druckniveau der armen Lösung an einem Einlass in den ersten Absorber aufweist. Der hydrostatische Druck der Flüssigkeitssäule gleicht den Druckverlust ohne zusätzliche Drossel oder andere zusätzliche Aggregate aus.

Vorzugsweise sind in der vorstehend genannten Sorptionswärmepumpe der erste Absorber und der zweite Absorber Plattenwärmetauscher. Solche Wärmetauscher sind technisch einfach, wartungsarm und stehen kostengünstig in einer Vielzahl von Ausführungen am Markt zur Verfügung.

Vorzugsweise sind in einer solchen Sorptionswärmepumpe der erste Absorber und der zweite Absorber als Blasenabsorber angeschlossen. Die Verwendung von Plattenwärmetauschern als Blasenabsorber ist allgemein bekannt. Die arme Lösung und der Kältemitteldampf werden dann in einer gleichgerichteten Strömung unten in den Absorber eingeleitet, beide steigen getrieben durch die Auftriebskraft der Blasen des Kältemitteldampfs nach oben, während diese von der armen Lösung absorbiert werden. Am oberen Ende tritt die mit dem Kältemitteldampf angereicherte arme Lösung aus dem Absorber aus.

In einer solchen Sorptionswärmepumpe entspricht der Druckverlust von der unten in den Absorber einströmenden zu der oben aus diesem ausströmenden Lösung etwa dem hydrostatischen Druck der Flüssigkeitssäule der armen Lösung zwischen beiden Punkten. Der zweite kann also neben dem ersten Absorber oder unterhalb dieser Höhe angeordnet werden, um das vorherige Druckniveau am Einlass zu gewährleisten.

Alternativ können in einer solchen Sorptionswärmepumpe die Absorber wie in der aus EP 3 964 770 A1 bekannten Sorptionswärmepumpe als Fallfilmabsorber angeschlossen werden, wobei die arme Lösung oben und der Kältemitteldampf unten eingeleitet werden und aneinander vorbeiströmen und die angereicherte arme Lösung am unteren Ende aus dem Absorber austritt.

Vorzugsweise weist eine solche Sorptionswärmepumpe ein Drosselventil auf, das die reiche Lösung nach Austritt aus dem zweiten Absorber zum Eintritt in den Austreiber entspannt, und eine Pumpe, die die arme Lösung nach Austritt aus dem Austreiber in den ersten Absorber pumpt. Eine solche erfindungsgemäße Sorptionswärmepumpe nimmt Wärme auf einem niedrigen Temperaturniveau auf und gibt sie auf einem höheren Niveau wieder ab. Die reiche Lösung kühlt im Drosselventil ab und kann so die Niedertemperaturwärme aufnehmen. Das gasförmige Kältemittel und das flüssige Lösungsmittel werden getrennt den Absorbern zugeführt. Pumpen sind allgemein bekannte Vorrichtungen in der Kältetechnik und stehen in einer Vielzahl von Ausführungen preisgünstig zur Verfügung.

Vorzugsweise weist eine solche Sorptionswärmepumpe einen Verdichter auf, der das Kältemittel nach Austritt aus dem Austreiber verdichtet. Die erfindungsgemäße Sorptionswärmepumpe stellt dann insbesondere Heizwärme für Gebäude bereit.

Alternativ vorzugsweise weist eine solche Sorptionswärmemaschine einen Verflüssiger auf, der das Kältemittel nach Austritt aus dem Austreiber verflüssigt, einen Verdampfer, der von außen zugeführte Wärme aufnimmt und das flüssige Kältemittel verdampft und eine Kältemittelpumpe, die das flüssige Kältemittel von dem Verflüssiger zu dem Verdampfer pumpt. Die Sorptionswärmepumpe stellt dann als Wärmetransformator Prozesswärme auf einem hohen Temperaturniveau bereit.

Alternativ vorzugsweise weist eine solche Sorptionswärmemaschine eine Lösungspumpe auf, die die reiche Lösung nach Austritt aus dem zweiten Absorber in den Austreiber pumpt, ein Entspannungsventil, das die arme Lösung nach Austritt aus dem Austreiber zum Eintritt in den ersten Absorber entspannt, einen Kondensator, in dem das Kältemittel aus dem Austreiber Wärme abgibt und kondensiert, einen Verdampfer, in dem das Kältemittel vor Eintritt in den ersten Absorber und den zweiten Absorber Wärme aufnimmt und ein Expansionsventil, das das flüssige Kältemittel nach Austritt aus dem Kondensator zum Eintritt in den Verdampfer expandiert. Die erfindungsgemäße Sorptionswärmepumpe stellt dann Kälte bereit.

Vorzugsweise ist in einer solchen Sorptionswärmepumpe das Lösungsmittel Wasser und das Kältemittel Ammoniak. Wasser und Ammoniak sind natürliche Stoffe und haben sich in der Kältetechnik bewährt.

Ausgehend von dem bekannten Sorptionskreisprozess wird nach der Erfindung vorgeschlagen, dass ein Druckverlust beim Absorbieren des ersten Teilstroms ein Druckniveau der armen Lösung vermindert, dann ein hydrostatischer Druck einer Flüssigkeitssäule der armen Lösung den Druckverlust ausgleicht und die arme Lösung den zweiten Teilstrom wieder auf dem Druckniveau absorbiert. Ein solcher Prozess wird mit einer nachstehend beschriebenen Sorptionswärmepumpe ausgeführt.

Vorzugsweise weisen in einem erfindungsgemäßen Sorptionskreisprozess die Teilstrom denselben Druck auf. In einem solchen erfindungsgemäßen Sorptionskreisprozess können die Teilströme ohne Drossel oder zusätzliche Aggregate aufgeteilt werden.

### Ausführungsbeispiele

Die Erfindung wird nachfolgend anhand von Ausführungsbeispielen erläutert. Es zeigen
Fig. 1a eine erste einen erfindungsgemäßen Sorptionskreisprozess verwirklichende Sorptionswärmepumpe und
Fig. 1b ein Detail der ersten Sorptionswärmepumpe,
Fig. 2 eine zweite einen erfindungsgemäßen Sorptionskreisprozess verwirklichende Sorptionswärmepumpe und
Fig. 3 eine dritte einen erfindungsgemäßen Sorptionskreisprozess verwirklichende Sorptionswärmepumpe.

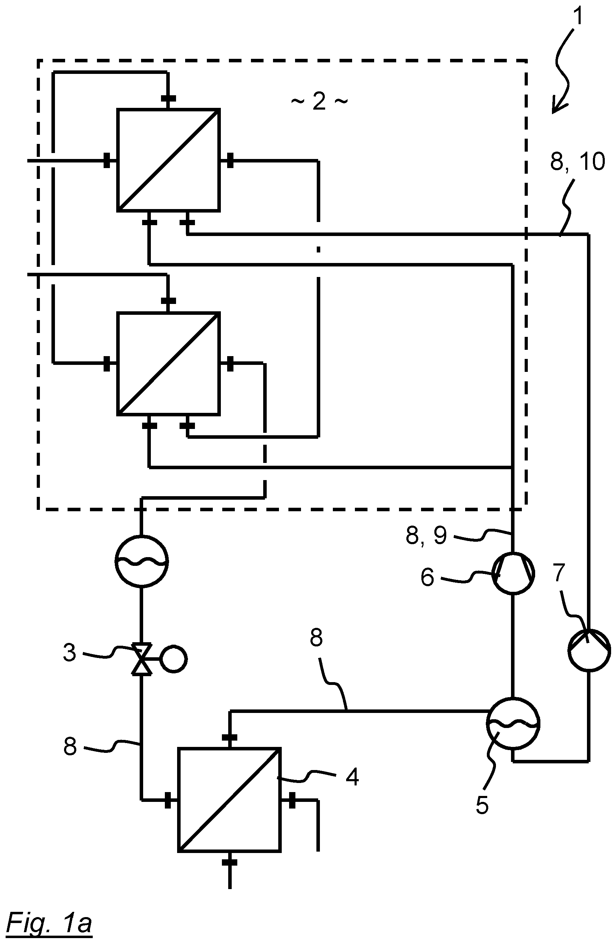

Die in Figur 1a gezeigte erste Sorptionswärmepumpe 1 weist eine Absorptionseinheit 2, ein Drosselventil 3, einen Austreiber 4, einen Abscheider 5, einen Verdichter 6, eine Pumpe 7 sowie Rohrleitungen 8 auf, die die vorgenannten in dieser Reihenfolge zu einem kreisförmig geschlossenen System verbinden, wobei der Verdichter 6 in einem Kältemittelzweig 9 und die Pumpe 7 in einem dazu parallel verlaufenden Lösungsmittelzweig 10 vom Abscheider 5 zur Absorptionseinheit 2 angeordnet ist.

In einem Zyklus eines erfindungsgemäßen Sorptionskreisprozesses mit Ammoniak (NH₃) als Kältemittel in Wasser als Lösungsmittel absorbiert in der Absorptionseinheit 2 ein Strom der armen Lösung einen Strom des Kältemittels und gibt an ein Heizmedium Heizleistung ab. Die mit 95 °C unter einem Druck von 32,9 *bar* aus der Absorptionseinheit 2 austretende reiche Lösung wird durch das Drosselventil 3 auf den Niederdruck von 8 *bar* entspannt und auf eine Temperatur von 45 °*C* abgekühlt und im Austreiber 4 mittels einer Wärmequelle auf 88 °*C* erhitzt. Die Wärmequelle wird hierbei von 90 °*C* auf 50 °*C* abgekühlt. Aus dem nachfolgenden Abscheider 5 wird die arme Lösung durch die Pumpe 7 und das gasförmige Kältemittel durch den Verdichter 6 auf den Hochdruck von 33,1 *bar* und in die Absorptionseinheit 2 gefördert.

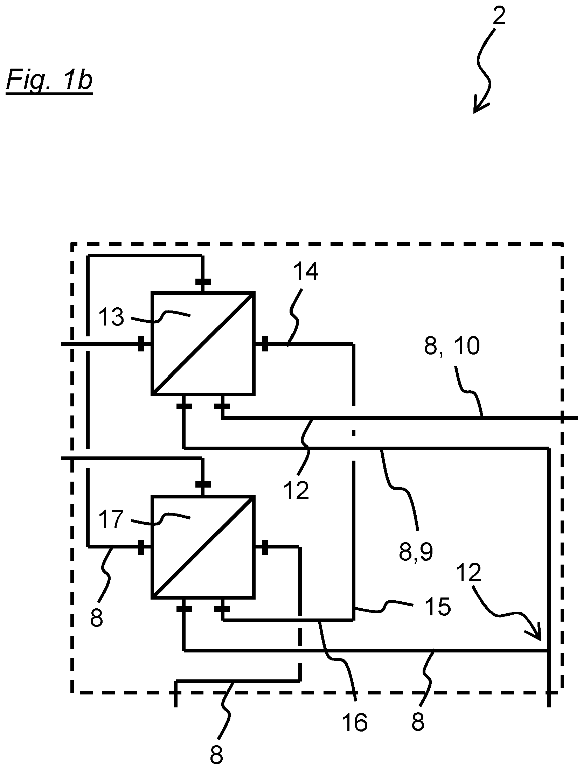

In der in Figur 1b im Detail gezeigten Absorptionseinheit 2 wird der Kältemittelstrom aus dem Verdichter 6 zunächst in einem Stromteiler 11 geteilt: Ein erster Teilstrom des Kältemittels wird mit der armen Lösung über einen Einlass 12 in einen ersten Absorber 13 geführt. Nach Absorption des ersten Teilstroms des Kältemittels stellt sich an einem Auslass 14 des ersten Absorbers 13 ein Druck von 32,9 *bar* ein. Die mit dem Kältemittel angereicherte Lösung wird über ein Fallrohr 15 und einen Einlass 16 in einen zweiten Absorber 17 geführt. Die angereicherte Lösung weist unten an dem Fallrohr 15 und an dem Einlass 16 wieder den ursprünglichen Druck von 33,1 darauf.

Der erste Absorber 13 und der zweite Absorber 17 sind Plattenwärmetauscher, die arme bzw. angereicherte Lösung und der Kältemitteldampf werden von unten auf die Platten verteilt und strömen zwischen diesen nach oben, wobei der Kältemitteldampf von der Lösung absorbiert wird. Die Platten sind nicht dargestellt. Ein flüssiges Heizmedium strömt mit einer Temperatur von 90 °*C* oben in den zweiten Absorber 17 und verlässt den ersten Absorber 13 unten mit einer Temperatur von 140 °*C*.

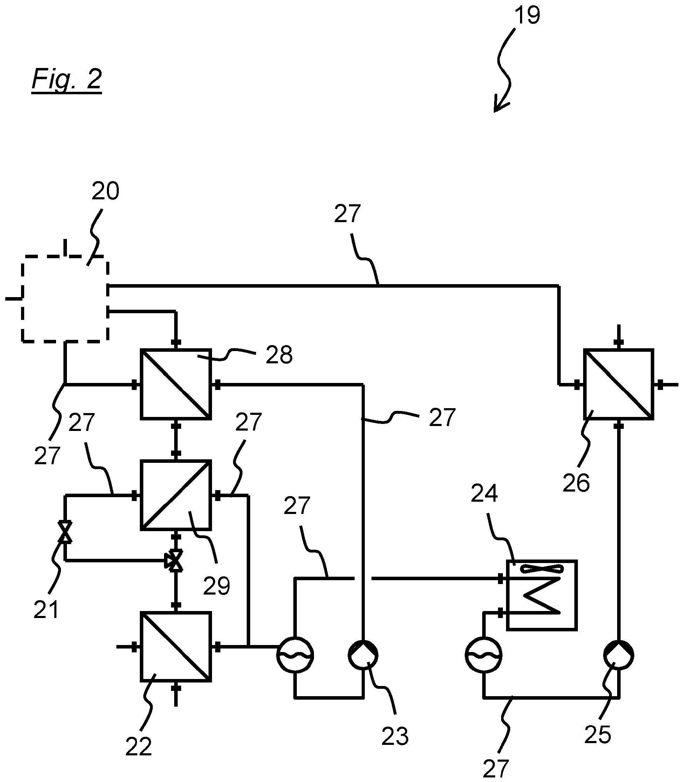

Die in Figur 2 gezeigte zweite Sorptionswärmepumpe 19 nimmt als Wärmetransformator mit Ammoniak (NH₃) als Kältemittel in Wasser als Lösungsmittel Abwärme auf einem niedrigen Temperaturniveau auf und stellt Prozesswärme auf einem höheren Niveau bereit. Sie weist eine Absorptionseinheit 20, ein Drosselventil 21, einen Austreiber 22, eine Lösungsmittelpumpe 23, einen Verflüssiger 24, eine Kältemittelpumpe 25 und einen Verdampfer 26 sowie Rohrleitungen 27 auf, die die vorgenannten in dieser Reihenfolge zu einem kreisförmig geschlossenen System verbinden, wobei aus dem Austreiber 22 das Lösungsmittel mittels der Lösungsmittelpumpe 23 und das Kältemittel parallel über den Verflüssiger 24, die Kältemittelpumpe 25 und den Verdampfer 26 in den Absorber geführt wird.

Nach Austritt aus dem Absorber gibt die reiche Lösung zunächst in einem Lösungswärmeübertrager 28 an das in die Absorptionseinheit 20 strömende Lösungsmittel und anschließend in einem weiteren Austreiber 29 an einen Teilstrom der aus dem Austreiber ausströmenden reichen Lösung Wärme ab. Die Absorptionseinheit 20 der zweiten Sorptionswärmepumpe 19 entspricht der Absorptionseinheit 2 der ersten Sorptionswärmepumpe 1.

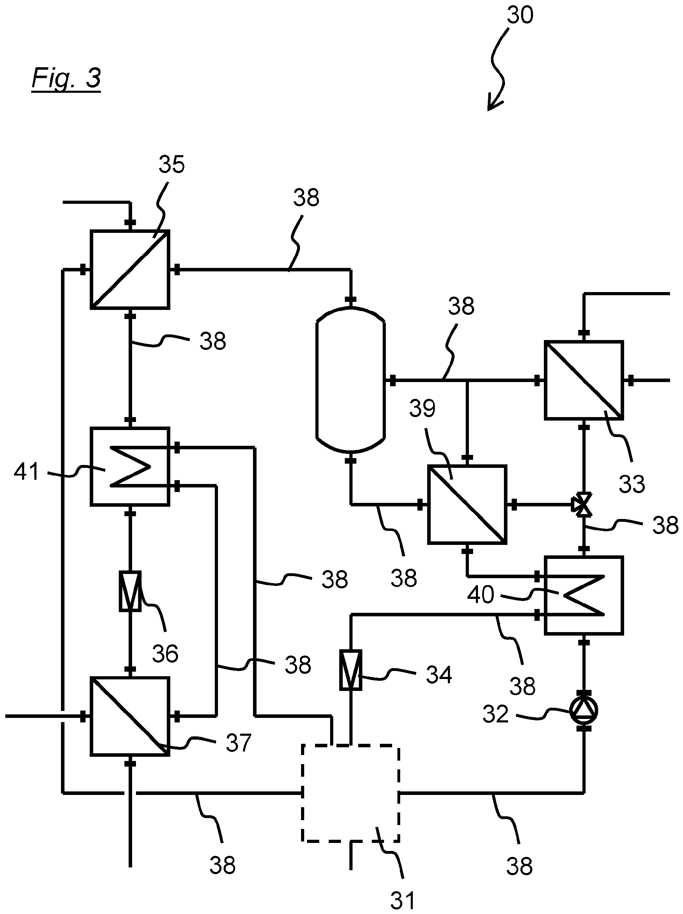

Die in Figur 3 gezeigte dritte Sorptionswärmepumpe 30 nimmt als Kältemaschine mit Ammoniak (NH₃) als Kältemittel in Wasser als Lösungsmittel Wärme auf einem niedrigen Temperaturniveau auf und gibt sie als Abwärme an die Umgebung ab. Sie weist eine Absorptionseinheit 31, eine Lösungspumpe 32, einen Austreiber 33, ein Entspannungsventil 34, einen Kondensator 35, ein Expansionsventil 36 und einen Verdampfer 37 sowie Rohrleitungen 38 auf, die die vorgenannten in dieser Reihenfolge zu einem kreisförmig geschlossenen System verbinden, wobei aus dem Austreiber 33 die arme Lösung über das Entspannungsventil 34 und parallel das Kältemittel über den Kondensator 35, das Expansionsventil 36 und den Verdampfer 37 in den Absorber geführt wird.

Nach Austritt aus dem Austreiber 33 gibt die arme Lösung zunächst in einem weiteren Austreiber 39 an einen an dem Austreiber 33 vorbei geführten Teilstrom der reichen Lösung und anschließend in einem Lösungswärmeübertrager 40 an die aus der Lösungspumpe 32 strömende reiche Lösung Wärme ab. Der aus dem Verdampfer 37 strömende Kältemitteldampf nimmt in einem Kältewärmeübertrager 41 aus dem flüssigen Kältemittel zwischen Kondensator 35 und Expansionsventil 36 Wärme auf. Die Absorptionseinheit 31 der dritten Sorptionswärmepumpe 30 entspricht der Absorptionseinheit 2 der ersten Sorptionswärmepumpe 1.

In den Figuren sind
- 1: Sorptionswärmepumpe
- 2: Absorptionseinheit
- 3: Drosselventil
- 4: Austreiber
- 5: Abscheider
- 6: Verdichter
- 7: Pumpe
- 8: Rohrleitung
- 9: Kältemittelzweig
- 10: Lösungsmittelzweig
- 11: Stromteiler
- 12: Einlass
- 13: erster Absorber
- 14: Auslass
- 15: Fallrohr
- 16: Einlass
- 17: zweiter Absorber
- 19: Sorptionswärmepumpe
- 20: Absorptionseinheit
- 21: Drosselventil
- 22: Austreiber
- 23: Lösungsmittelpumpe
- 24: Verflüssiger
- 25: Kältemittelpumpe
- 26: Verdampfer
- 27: Rohrleitung
- 28: Lösungswärmeübertrager
- 29: Austreiber
- 30: Sorptionswärmepume
- 31: Absorptionseinheit
- 32: Lösungspumpe
- 33: Austreiber
- 34: Entspannungsventil
- 35: Kondensator
- 36: Expansionsventil
- 37: Verdampfer
- 38: Rohrleitung
- 39: Austreiber
- 40: Lösungswärmeübertrager
- 41: Kältewärmeübertrager

## Patentansprüche

1. Sorptionskreisprozess mit gasförmigem Kältemittel und flüssigem Lösungsmittel, einer armen und einer reichen Lösung, wobei die arme und die reiche Lösung einphasige Mischungen des Lösungsmittels und des Kältemittels sind, und wobei die arme Lösung unter einem Druckverlust einen ersten Teilstrom des Kältemittels und unmittelbar anschließend einen zweiten Teilstrom des Kältemittels absorbiert und dabei jeweils Wärme abgibt, ***dadurch gekennzeichnet, dass*** der Druckverlust ein Druckniveau der armen Lösung vermindert, dann ein hydrostatischer Druck einer Flüssigkeitssäule der armen Lösung den Druckverlust ausgleicht und die arme Lösung den zweiten Teilstrom wieder auf dem Druckniveau absorbiert.

2. Sorptionskreisprozess nach dem vorgenannten Anspruch, ***dadurch gekennzeichnet, dass*** die Teilströme denselben Druck aufweisen.

3. Sorptionskreisprozess nach einem der vorgenannten Ansprüche, ***gekennzeichnet durch*** eine Sorptionswärmepumpe (1, 19, 30) mit einem ersten Absorber (13), in dem die arme Lösung den ersten Teilstrom des Kältemittels absorbiert, einem zweiten Absorber (17), in dem die arme Lösung den zweiten Teilstrom des Kältemittels absorbiert, einem Austreiber (4, 22, 33), in dem die reiche Lösung von außen zugeführte Wärme aufnimmt und dabei das Kältemittel austreibt und einem Fallrohr (15) zwischen einem Auslass (14) für die arme Lösung aus dem ersten Absorber (13) und einem Einlass (16) für die arme Lösung in den zweiten Absorber (17), wobei die Flüssigkeitssäule an dem Einlass (16) in den zweiten Absorber (17) ein Druckniveau der armen Lösung an dem Einlass (12) in den ersten Absorber aufweist.

4. Sorptionskreisprozess nach dem vorgenannten Anspruch, ***dadurch gekennzeichnet, dass*** der erste Absorber (13) und der zweite Absorber (17) Plattenwärmetauscher sind.

5. Sorptionskreisprozess nach dem vorgenannten Anspruch, ***dadurch gekennzeichnet, dass*** der erste Absorber (13) und der zweite Absorber (17) als Blasenabsorber angeschlossen sind.

6. Sorptionskreisprozess nach einem der Ansprüche 3 bis 5, ***gekennzeichnet durch*** ein Drosselventil (3, 21), das die reiche Lösung nach Austritt aus dem zweiten Absorber (17) zum Eintritt in den Austreiber (4, 22, 33) entspannt, und eine Pumpe (7), die die arme Lösung nach Austritt aus dem Austreiber (4, 22, 33) in den ersten Absorber (13) pumpt.

7. Sorptionskreisprozess nach dem vorgenannten Anspruch, ***gekennzeichnet durch*** einen Verdichter (6), der das Kältemittel nach Austritt aus dem Austreiber (4) verdichtet.

8. Sorptionskreisprozess nach Anspruch 6, ***gekennzeichnet durch*** einen Verflüssiger (24), der das Kältemittel nach Austritt aus dem Austreiber (22) verflüssigt, einen Verdampfer (26), der von außen zugeführte Wärme aufnimmt und das flüssige Kältemittel verdampft und eine Kältemittelpumpe (25), die das flüssige Kältemittel von dem Verflüssiger (24) zu dem Verdampfer (26) pumpt.

9. Sorptionskreisprozess nach einem der Ansprüche 3 bis 5, ***gekennzeichnet durch*** eine Lösungspumpe (32), die die reiche Lösung nach Austritt aus dem zweiten Absorber (17) in den Austreiber (33) pumpt, ein Entspannungsventil (34), das die arme Lösung nach Austritt aus dem Austreiber (33) zum Eintritt in den ersten Absorber (13) entspannt, einen Kondensator (35), in dem das Kältemittel aus dem Austreiber (33) Wärme abgibt und kondensiert, einen Verdampfer (37), in dem das Kältemittel vor Eintritt in den ersten Absorber (13) und den zweiten Absorber (17) Wärme aufnimmt und ein Expansionsventil (36), das das flüssige Kältemittel nach Austritt aus dem Kondensator (35) zum Eintritt in den Verdampfer (37) expandiert.

10. Sorptionskreisprozess nach einem der vorgenannten Ansprüche, ***dadurch gekennzeichnet, dass*** das Lösungsmittel Wasser und das Kältemittel Ammoniak ist.

## Claims

1. A cyclical sorption process with a gaseous refrigerant and a liquid solvent, a lean and a rich solution, wherein the lean solution and the rich solution are single-phase mixtures of the solvent and the refrigerant, and wherein the lean solution absorbs a first partial flow of the refrigerant during a loss in pressure and immediately thereafter absorbs a second partial flow of the refrigerant and in both cases simultaneously emits heat, ***characterized in that*** the loss in pressure reduces a pressure level of the lean solution, before a hydrostatic pressure of a liquid column of the lean solution compensates the loss in pressure and the lean solution which has been restored to the pressure level absorbs the second partial flow.

2. The cyclical sorption process according to the preceding claim, ***characterized in that*** the partial flows have the same pressure.

3. The cyclical sorption process according to one of the preceding claims, ***characterized by*** a sorption heat pump (1, 19, 30) with a first absorber (13), in which the lean solution absorbs the first partial flow of the refrigerant, a second absorber (17), in which the lean solution absorbs the second partial flow of the refrigerant, a stripper (4, 22, 33), in which the rich solution absorbs exogenous heat and in the process strips out the refrigerant, and a downcomer (15) between an outlet (14) for the lean solution from the first absorber (13) and an inlet (16) for the lean solution into the second absorber (17), wherein the liquid column at the inlet (16) into the second absorber (17) has a pressure level of the lean solution at the inlet (12) into the first absorber.

4. The cyclical sorption process according to the preceding claim, ***characterized in that*** the first absorber (13) and the second absorber (17) are plate heat exchangers.

5. The cyclical sorption process according to the preceding claim, ***characterized in that*** the first absorber (13) and the second absorber (17) are connected as bubble absorbers.

6. The cyclical sorption process according to any one of claims 3 to 5, ***characterized by*** a throttle valve (3, 21), which relaxes the rich solution between its discharge from the second absorber (17) and its entry into the stripper (4, 22, 33), and a pump (7), which pumps the lean solution after its discharge from the stripper (4, 22, 33) into the first absorber (13).

7. The cyclical sorption process according to the preceding claim, ***characterized by*** a compressor (6), which compresses the refrigerant after its discharge from the stripper (4).

8. The cyclical sorption process according to claim 6, ***characterized by*** a condenser, (24) which liquefies the refrigerant after its discharge from the stripper (22), an evaporator (26), which absorbs exogenous heat and evaporates the liquid refrigerant, and a refrigerant pump (25), which pumps the liquid refrigerant from the condenser (24) to the evaporator (26) .

9. The cyclical sorption process according to one of claims 3 to 5, ***characterized by*** a solution pump (32), which pumps the rich solution into the stripper (33) after its discharge from the second absorber (17), a relaxation valve (34), which relaxes the lean solution between its discharge from the stripper (33) and its entry into the first absorber (13), a condenser (35), in which the refrigerant from the stripper (33) emits heat and condenses, an evaporator (37), in which the refrigerant absorbs heat prior to its entry into the first absorber (13) and into the second absorber (17), and an expansion valve (36), which expands the liquid refrigerant between its discharge from the condenser (35) and its entry into the evaporator (37).

10. The cyclical sorption process according to one of the preceding claims, ***characterized in that*** the solvent is water and the refrigerant is ammonia.

## Revendications

1. Procédé à cycle d'absorption comportant un agent réfrigérant gazeux et un solvant liquide, une solution pauvre et une solution riche, sachant que la solution pauvre et la solution riche sont des mélanges monophasés du solvant et de l'agent réfrigérant et sachant que la solution pauvre absorbe sous une perte de pression un premier flux partiel de l'agent réfrigérant et immédiatement après un deuxième flux partiel de l'agent réfrigérant et deliver respectivement à cet effet de la chaleur, **caractérisé en ce que** la perte de pression réduit un niveau de pression de la solution pauvre, qu'ensuite une pression hydrostatique d'une colonne de liquide de solution pauvre compense la perte de pression et la solution pauvre absorbe le deuxième flux partiel à nouveau au niveau de pression.

2. Procédé à cycle d'absorption selon la revendication précédente, **caractérisé en ce que** les flux partiels comportent la même pression.

3. Procédé à cycle d'absorption selon l'une quelconque des revendications précédentes, **caractérisé par** une pompe à chaleur à absorption (1, 19, 30) avec un premier absorbeur (13), dans lequel la solution pauvre absorbe le premier flux partiel de l'agent réfrigérant, un deuxième absorbeur (17), dans lequel la solution pauvre absorbe le deuxième flux partiel de l'agent réfrigérant, un éjecteur (4, 22, 33), dans lequel la solution riche absorbe la chaleur apportée de l'extérieur et éjecte à cet effet l'agent réfrigérant et un tuyau de descente (15) entre une sortie (14) pour la solution pauvre du premier aborbeur (13) et une entrée (16) pour la solution pauvre dans le deuxième absorbeur (17) sachant que la colonne de liquide comporte à l'entrée (16) dans le deuxième absorbeur (17) un niveau de pression de la solution pauvre à l'entrée (12) dans le premier absorbeur.

4. Procédé à cycle d'absorption selon la revendication précédente, **caractérisé en ce que** le premier absorbeur (13) et le deuxième absorbeur (17) sont des échangeurs de chaleur à plaques.

5. Procédé à cycle d'absorption selon l'une quelconque des revendications précédentes, **caractérisé en ce que** le premier absorbeur (13) et le deuxième absorbeur (17) sont raccordés en tant qu'absorbeurs de bulles.

6. Procédé à cycle d'absorption selon l'une quelconque des revendications 3 à 5, **caractérisé par** une soupape d'étranglement (3, 21) qui détend la solution riche après sortie du deuxième absorbeur (17) à l'entrée dans l'éjecteur (4, 22, 33) et une pompe (7), qui pompe la solution pauvre après sortie de l'éjecteur (4, 22, 33) dans le premier absorbeur (13).

7. Procédé à cycle d'absorption selon l'une quelconque des revendications précédentes, **caractérisé par** un compresseur (6), qui comprime l'agent réfrigérant après sortie de l'éjecteur (4).

8. Procédé à cycle d'absorption selon la revendication 6, **caractérisé par** un condenseur (24), qui fluidifie l'agent réfrigérant après sortie de l'éjecteur (22), un évaporateur (26), qui reçoit de la chaleur apportée de l'extérieur et évapore l'agent réfrigérant liquide et une pompe d'agent réfrigérant (25) qui pompe l'agent réfrigérant liquide du condenseur (24) vers l'évaporateur (26).

9. Procédé à cycle d'absorption selon l'une quelconque des revendications 3 à 5, **caractérisé par** une pompe à solution (32), qui pompe la solution riche après sortie du deuxième absorbeur (17) dans l'éjecteur (33),
un détendeur (34), qui détend la solution pauvre après sortie de l'éjecteur (33) à l'entrée dans le premier absorbeur (13),
un condenseur (35) dans lequel l'agent réfrigérant venant de l'éjecteur (33) délivre et condense de la chaleur, un évaporateur (37), dans lequel l'agent réfrigérant reçoit de la chaleur avant entrée dans le premier absorbeur (13) et le deuxième absorbeur (17)
et une soupape de détente (36), qui détend l'agent réfrigérant liquid après sortie du condenseur (35) à l'entrée dans l'évaporateur (37).

10. Procédé à cycle d'absorption selon l'une quelconque des revendications précédentes, **caractérisée en ce que** le solvant est de l'eau et l'agent réfrigérant de l'ammoniac.
